# EUROPÄISCHE PATENTSCHRIFT

(11) **EP 3 980 679 B1**
(45) Veröffentlichungstag und Bekanntmachung des Hinweises auf die Patenterteilung: **28.06.2023**
(21) Anmeldenummer: 20725469.9
(22) Anmeldetag: 07.05.2020
(51) Int. Cl.: F16L 55/165

(54) **ANORDNUNG UND VERFAHREN ZUM SANIEREN EINES ROHRES, INSBESONDERE EINES ABWASSERROHRES**
ARRANGEMENT AND METHOD FOR MENDING A PIPE, PARTICULARLY A WASTE WATER PIPE
ENSEMBLE ET PROCÉDÉ POUR RÉNOVER UN TUBE, EN PARTICULIER UNE CONDUITE D'EAUX USÉES

(30) Priorität: 07.06.2019 DE 102019115556
(43) Veröffentlichungstag der Anmeldung: 13.04.2022
(73) Patentinhaber: Global Safety Textiles GmbH, 79713 Bad Säckingen (DE); Swissinliner GmbH, 6330 Cham (CH)
(72) Erfinder: BALLIKAYA, Ergül, 6015 Luzern (CH)
(74) Vertreter: Kilian Kilian & Partner
(86) Internationale Anmeldenummer: PCT/EP2020/062729
(87) Internationale Veröffentlichungsnummer: WO 2020/244883

(56) Entgegenhaltungen:
- DE-T2- 69 727 295
- US-A- 5 501 248
- US-A- 5 855 729
- US-A1- 2006 070 676
- US-A1- 2013 098 535

## Beschreibung

Die vorliegende Erfindung betrifft eine Anordnung und ein Verfahren zum Sanieren eines Rohres, insbesondere eines Abwasserrohres.

Unterirdisch verlegte beschädigte Wasser- oder Abwasserrohre zu sanieren oder auszutauschen ist eine sehr kostspielige und aufwändige Angelegenheit. Bei unter Fahrbahnen verlegten Rohren wird in der Regel der Verkehr an der Oberfläche empfindlich gestört. Manche Rohre sind aber aufgrund einer Überbauung überhaupt nicht mehr von oben erreichbar. Ein kompletter Neubau auf anderer Trasse wäre hier die auch sehr kostspielige Alternative. Infolge dieser Schwierigkeiten wurden Verfahren entwickelt, mit welchen ein Austausch der Rohre vermieden und stattdessen ein Abdichten der schadhaften Rohrinnenwand durch Einziehen und Anlegen einer Auskleidung, wie z. B. eines Schlauches an die Rohrinnenwand durchgeführt wird. Ein geringfügiger Querschnittsverlust wird hierbei in Kauf genommen.

Aus der EP 3 137 804 B1 ist eine Auskleidung für die Sanierung von teilweise beschädigten oder überalterten Rohren für Trinkwasser oder Abwasser, sowie ein Verfahren zum Herstellen einer solchen Auskleidung bekannt. Das hierbei eingesetzte gewirkte Schlauchmaterial hat weder eine radiale noch eine axiale Festigkeit und legt sich deshalb beim Einbau in ein in der Regel defektes Rohr, dessen schadhafte Kontur "kopierend", an dessen Innenwand an, wobei z. B. auch Ausbuchtungen kopiert werden. Dies kann bei der Sanierung zur neuerlichen Bildung von Blockaden und Hohlräumen führen, welche wiederum den Nachteil haben, dass sich hierdurch im Rohr neue Leckage- und Blockadeherde bilden.

Aus der US 5 501 248 A ist eine Anordnung zum Sanieren eines Rohres, insbesondere eines Abwasserrohres bekannt, die einen in einem Stück gewebten an seiner Außenwand vorzugsweise laminierten ersten Textilschlauch und einen in einem Stück gewebten zweiten Textilschlauch zur Einführung in den Schlauch aufweist. Ebenfalls aus dieser Schrift ist ein Verfahren zum Sanieren eines Rohres, insbesondere eines Abwasserrohres, vorzugsweise unter Verwendung einer Anordnung zum Sanieren eines Rohres, insbesondere eines Abwasserrohres bekannt, die einen in einem Stück gewebten an seiner Außenwand vorzugsweise laminierten ersten Textilschlauch und einen in einem Stück gewebten zweiten Textilschlauch zur Einführung in den Schlauch aufweist, bekannt, wobei das Verfahren folgende Schritte aufweist: Einbringen eines in einem Stück gewebten an seiner Außenwand laminierten ersten Textilschlauchs in das Rohr, insbesondere Abwasserrohr, Einbringen eines in einem Stück gewebten zweiten Textilschlauchs in das Innere des Schlauches, im Wesentlichen luftdichtes Abschließen des zweiten Textilschlauchs, Aufblasen des zweiten Textilschlauchs, eine vorbestimmte Zeitdauer lang dauerndes radiales Andrücken des zweiten Textilschlauchs, sowie des ersten Textilschlauchs an das Rohr, insbesondere Abwasserrohr, Aushärten lassen der aushärtbaren Kunstharzmischung.

Bei einem herkömmlichen Verfahren zum Sanieren eines Abwasserrohres wird ein Filzschlauch im sogenannten Umstülpverfahren eingebracht. Hierbei werden in das zu sanierende Rohr zunächst eine Gleitbahn oder ein Folienschlauch ("Preliner") als sog. verlorene Schalung und danach ein Filzschlauch ("Hauptliner") als Trägerschlauch, zusammen mit einem Kalibrierschlauch eingezogen. Weder der Preliner noch der Hauptliner können aber aufgrund ihrer Materialeigenschaften (unbewehrte Kunststofffolie und Filzgewebe) radiale oder axiale Kräfte aufnehmen. Die Kombination aus Hauptliner und Kalibrierschlauch ist in der Aufnahme axialer Kräfte begrenzt. Der herkömmliche Preliner ist aufgrund seiner Materialstruktur luftundurchlässig. Alle Komponenten werden nacheinander im Umstülpverfahren eingebaut. Hierbei erfolgt der Einzug von Wartungsschacht zu Wartungsschacht oder von einem Wartungsschacht aus zu einem "blinden" Ende hin (d. h. Einbau in ein Leitungsende ohne Zugang, sog. Open-End-Verfahren). Nach dem Einbau wird das System mit Druck bis etwa 0,8 bar beaufschlagt und dabei expandiert. Danach wird das im Hauptliner enthaltene Kunstharz ausgehärtet. Dieses System hat ebenfalls den Nachteil, dass die schadhafte Kontur der Innenwand des zu sanierenden Rohrs kopiert wird, mit den oben geschilderten negativen Folgen. Da das System kaum axiale Kräfte aufnehmen kann, werden unregelmäßige Querschnitte des Altrohres nachgeformt. Der Filzschlauch folgt der Form des Altrohres mit allen dessen Deformationen.

Bei einem anderen bekannten Verfahren, dem sog. Hybridliner-Verfahren kommt ein Hybridliner, das ist ein werksseitig hergestellter, mit Glasfasermatten verstärkter Filzschlauch, zum Einsatz. Der Hybridliner wird in einen verstärkten, licht- und luftundurchlässig ausgebildeten Preliner (Folienschlauch) eingezogen. Preliner und Hybridliner werden dann mit dem Kalibrierschlauch in das schadhafte Rohr eingezogen. Die Versorgung bzw. Tränkung des Hybridliners mit Harz erfolgt vor Ort auf der Baustelle. Die Anordnung wird von Schacht zu Schacht eingezogen und mit Hilfe des Kalibrierschlauchs radial ausgedehnt. Danach wird das im Hybridliner befindliche Kunstharz ausgehärtet.

Der genannte Hybridliner besitzt nach der Aushärtung aufgrund der integrierten Glasfaserarmierung mit höherem E-Modul und höherer Biegezugfestigkeit eine wesentlich höhere Widerstandsfähigkeit als ein einfacher Filzschlauch. Wegen der Steifigkeit der integrierten Glasfasermatten ist hier das Umstülp-Verfahren allerdings nicht möglich. Der Hybridliner kann nur durch knickfreies Einziehen in eine Rohrleitung eingebaut werden und ist wegen der beschränkten Biegbarkeit der Glasfasern nur sehr eingeschränkt bogengängig. Hierdurch ist sein Einbau, der auch nur zwischen frei zugänglichen Wartungsschächten möglich ist, aufwändiger und kostspieliger.

Es ist eine Aufgabe der Erfindung, eine Anordnung und ein Verfahren vorzuschlagen, mit welchen die aus dem Stand der Technik bekannten Nachteile vermieden oder zumindest stark verringert werden.

Die Aufgabe wird zunächst gelöst mit einer Anordnung zum Sanieren eines Rohres, insbesondere eines Abwasserrohres, gemäß Anspruch 1, nämlich einer

Anordnung zum Sanieren eines Rohres, insbesondere eines Abwasserrohres, die folgende Elemente aufweist:
a) einen in einem Stück gewebten an seiner Außenwand laminierten ersten Textilschlauch,
b) einen im Inneren des ersten Textilschlauchs angeordneten, mit einer aushärtbaren Kunstharzmischung benetzten Filzschlauch, und
c) einen in einem Stück gewebten an seiner Außenwand mit einem an der Kunstharzmischung nicht anhaftenden Trennmittel, vorzugsweise Silikon beschichteten zweiten Textilschlauch zur Einführung in den Filzschlauch.

Mit der erfindungsgemäßen neuen Anordnung lässt sich vorteilhafterweise eine stabile Innenauskleidung von Rohren fertigen, welche auch in kurvenreichen Rohrleitungen mit Bögen bis 90° eingebaut werden können, was mit Vorrichtungen aus dem Stand der Technik nicht möglich ist. Die Ausbildung des ersten Schlauchs als in einem Stück gewebter Textilschlauch, sogenannter OPW-Schlauch ("One-Piece-Woven" bedeutet "in einem Stück gewebt") hat den großen Vorteil, dass dieser keine, bei aus dem Stand der Technik eingesetzten Schläuchen vorliegende, relativ stark auftragende Nähte aufweist. Dadurch sind leichteres Handhaben, auch in Kurven und eine wesentlich feinere Konturführung im zu sanierenden Rohr möglich. Auch wird dadurch das Innenlumen weniger verkleinert als bei aus dem Stand der Technik bekannten Schläuchen. Daneben lässt sich ein Umstülpen wesentlich leichter bewerkstelligen. Da auch der zweite Schlauch, welcher die Funktion eines Kalibrierschlauchs hat, als OPW-Schlauch ausgeführt ist, kann dieser ebenfalls der feinen Kontur des ersten Schlauchs folgen. Eine geschmeidigere Kontur der Innenwand ist u. a. die Folge. Außerdem führt der Einsatz eines mit Silikon beschichteten zweiten Textilschlauchs im Ergebnis vorteilhafterweise zu einer sehr glatten inneren Oberfläche im sanierten Rohr.

In einer vorteilhaften Ausbildung der Erfindung ist die Anordnung dadurch gekennzeichnet, dass der zweite Textilschlauch in seinem Inneren vorteilhafterweise eine Einrichtung zum Einbringen von Wärme, Dampf und/oder Licht aufweist. Damit kann die Art der Aushärtung der aushärtbaren Kunstharzmischung am oder im Filzschlauch frei gewählt sowie kombiniert werden. Die Bandbreite der möglichen Aushärtungsverfahren wird vergrößert und lässt eine individuelle Vorgehensweise je nach Anforderungen der Gegebenheiten an der jeweiligen Baustelle zu.

Die Aufgabe wird weiterhin gelöst mit einem Verfahren nach Anspruch 3, vorzugsweise unter Verwendung einer Anordnung gemäß Anspruch 1 oder 2, nämlich einem Verfahren zum Sanieren eines Rohres, insbesondere eines Abwasserrohres, das folgende Schritte aufweist:
a) Einbringen eines in einem Stück gewebten an seiner Außenwand vorzugsweise laminierten ersten Textilschlauchs in das Rohr, insbesondere Abwasserrohr,
b) Einbringen eines mit einer aushärtbaren Kunstharzmischung benetzten Filzschlauchs in das Innere des ersten Textilschlauchs,
c) Einbringen eines in einem Stück gewebten an seiner Außenwand mit einem an der Kunstharzmischung nicht anhaftenden Trennmittel, vorzugsweise Silikon beschichteten zweiten Textilschlauchs in das Innere des Filzschlauchs,
d) Im Wesentlichen luftdichtes Abschließen des zweiten Textilschlauchs,
e) Aufblasen des zweiten Textilschlauchs,
f) Eine vorbestimmte Zeitdauer lang dauerndes radiales Andrücken des zweiten Textilschlauchs, des Filzschlauchs sowie des ersten Textilschlauchs an das Rohr, insbesondere Abwasserrohr,
g) Aushärtenlassen der aushärtbaren Kunstharzmischung,
h) Entfernen des zweiten Textilschlauchs aus dem Inneren des Filzschlauches.

Das erfindungsgemäße neue Verfahren ermöglicht eine wesentlich schnellere und kostengünstigere Sanierung von schadhaften Rohren. Darüber hinaus können wesentlich beständigere und widerstandsfähigere Neuauskleidungen von Rohren geschaffen werden, als dies mit aus dem Stand der Technik bekannten Verfahren möglich ist. Es können mit den unter Verwendung von in OPW-Technik hergestellten Schläuchen sowohl in radialer wie axialer Richtung statisch höher belastbare Kanalsanierungen ausgeführt werden. In axialer Richtung erlaubt das OPW-Gewebe der erfindungsgemäßen Textilschläuche eine erheblich höhere Zugbeanspruchung sowie eine wesentlich höhere dynamische Belastung beim Einbau als bei herkömmlichen Lösungen. Der Einsatz eines mit Silikon beschichteten zweiten Textilschlauchs führt im Ergebnis vorteilhafterweise zu einer sehr glatten inneren Oberfläche im sanierten Rohr.

In einer vorteilhaften Ausbildung der Erfindung ist das Verfahren dadurch gekennzeichnet, dass der Schritt b) derart ausgeführt wird, dass ein an seiner Innenwand mit einer aushärtbaren Kunstharzmischung benetzter Filzschlauch beim Einbringen in das Innere des ersten Textilschlauchs derart umgestülpt wird, dass seine Innenwand nach dem Umstülpen nach außen zu dem ersten Textilschlauch zeigt. Die Anordnung kann gemäß dem erfindungsgemäßen Verfahren im Einzugsverfahren und in bogengängigen Leitungen im Umstülp-Verfahren eingebaut werden. Auch Blindanschlüsse können mit dem erfindungsgemäßen Verfahren eingebaut werden. Das Verfahren kann auch bei Rohren Anwendung finden, bei denen zum Zeitpunkt der Montage nur ein einseitiger Zugang möglich ist (Open-End-Technik).

In einer weiteren vorteilhaften Ausbildung der Erfindung ist das Verfahren dadurch gekennzeichnet, dass der zweite Textilschlauch während der Schritte f) und g) in seinem Inneren mit Wärme, Dampf oder Licht beaufschlagt wird. Bei luftdicht abgeschlossenem zweiten Textilschlauch kann über eine darin angeordnete Wärme-, Dampf- oder Lichtquelle das Aushärten der Kunstharzmischung vorteilhafterweise unterstützt und beschleunigt werden.

In wieder einer anderen vorteilhaften Ausbildung der Erfindung ist das Verfahren dadurch gekennzeichnet, dass der zweite Textilschlauch bei Schritt e) auf einen Druck von bis zu 4 bar aufgeblasen wird, dass der erste Textilschlauch fest an das Rohr, insbesondere Abwasserrohr gedrückt wird. Diese besonders vorteilhafte erfindungsgemäße Vorgehensweise ermöglicht die Herstellung nahezu perfekter Rohrauskleidungen, die außerordentlich dicht sind. In dieser Prozessstufe steht der erste Textilschlauch bereits so unter Druck, dass bis zum Aushärten des Kunstharzes kein Grundwasser o. ä von außen in die Auskleidung gelangen kann.

Auch das sog. Hinterläufigkeitsproblem kann damit gelöst werden: Einerseits verkleben Preliner herkömmlicher Systeme, das sind in der Regel Folienschläuche, weder mit dem mit einer aushärtbaren Kunstharzmischung benetzten Filzschlauch (Trägerschlauch) noch mit dem Altrohr. Deswegen kann eindringendes Wasser in deren Zwischenraum gelangen. Wird andererseits beim Öffnen von Seitenanschlüssen (Stutzen) in der Kanalisation die Außenhaut des neuen Trägerschlauchs angebohrt, führt dies dazu, dass in den Hohlraum zwischen Trägerschlauch und dem Altrohr, welcher durch den herkömmlichen Preliner entsteht, und hinter den Trägerschlauch Abwasser gelangen und über das Altrohr entweichen kann. Ebenso strömt auch Grundwasser auf diesem Weg in die Kanalisation. All das kann mit dem erfindungsgemäßen Verfahren vermieden werden.

Weitere Vorteile der Erfindung finden sich in der folgenden Beschreibung.

Zum besseren Verständnis der Erfindung wird diese im Folgenden anhand eines Ausführungsbeispiels unter Zuhilfenahme einer Zeichnung kurz beschrieben.
- Fig. 1: zeigt stark schematisiert ein Kanalrohr/Abwasserrohr mit Scherbenbruch und Abwassereinbruch und eingebauter Auskleidung gemäß dem Stand der Technik in Schnittansicht.
- Fig. 1a: zeigt stark schematisiert eine stark vergrößerte Einzelheit X von Fig. 1.
- Fig. 2: zeigt stark schematisiert eine Anordnung gemäß der Erfindung, mit einem in ein Rohr eingeführten ersten Textilschlauch, mit einem mit einer aushärtbaren Kunstharzmischung benetzten Filzschlauch und einem zweiten Textilschlauch als Kalibrierschlauch, eingeführt in den Filzschlauch.

Die Maßverhältnisse Dicke zu Durchmesser sind in der Zeichnung zum besseren Verständnis extrem überzogen dargestellt. Im Folgenden wird manchmal von einem Rohr, einem Abwasser- oder Trinkwasserrohr gesprochen. Was die Erfindung angeht besteht hier kein Unterschied. Grundsätzlich geht es in der Regel um zu sanierende Ton-, Keramik- oder Betonrohre, Steinzeug und dergl. In der folgenden Beschreibung werden Bauteile oder Elemente, die einander entsprechen der Einfachheit halber mit gleichen Bezugszeichen markiert.

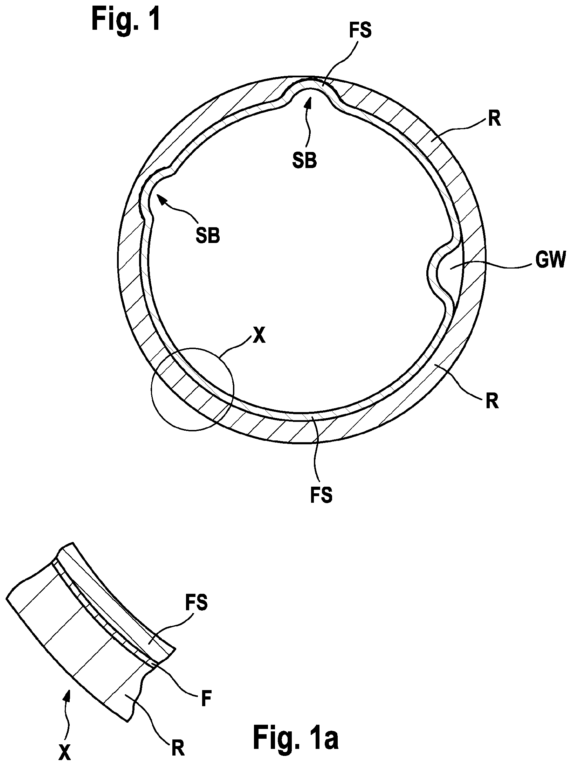

In Fig. 1 ist ein Rohr R dargestellt, welches nach einem aus dem Stand der Technik bekannten herkömmlichen Verfahren saniert wurde. Im Inneren des Rohrs R ist ein mit Kunstharz getränkter Filzschlauch FS, der aus einem Längsmaterial zusammengenäht oder -geklebt ist, angeordnet. Die heutigen Schläuche werden aus Flächenmatten zusammengenäht oder -geklebt und als Schlauch mit längsseitiger Naht gefertigt. Deswegen können keine höheren Drücke aufgenommen werden. Der Filzschlauch FS wird mit einem heute üblichen Kalibrierschlauch aufgeweitet. Dieser drückt den Filzschlauch FS zusammen mit dem Preliner F an das zu sanierende Rohr. Er ist in der Regel nicht lichtdurchlässig und nur bis zu einem Druck von 0,8 bar belastbar. Er kann bei höherem Druck auf ganzer Länge aufreißen.

Der Filzschlauch FS liegt, wie in Fig. 1 gezeigt ist, in Bereichen SB, in welchen das Rohr durch einen sog. Scherbenbruch beschädigt ist, der Bruchkontur folgend am Rohr an. Der Filzschlauch FS hat beim Einbauen die Kontur des beschädigten Rohrs "kopiert". An der mit GW markierten Stelle ist durch eine im Rohr vorliegende Porosität oder ein Leck Grundwasser eingebrochen, welches in der Regel mit etwa 0,8 bar in das Rohr drückt und den beim Einbau mit etwa 0,6 bar aufgeweiteten Filzschlauch nach innen drückt. Die hier beispielhaft sich radial erstreckend gezeigten Bereiche SB und GW erstrecken sich in der Realität natürlich auch axial im Rohr. Der Filzschlauch FS bricht bei Fehlstellen des Altrohres in die Hohlräume ein. Er expandiert bei der Montage und, da er nicht formbeständig ist, verformt er sich nicht kreisförmig. Dadurch wird die Wanddicke im Filzschlauch sehr ungleichmäßig, im Sohlebereich zu dick und im Scheitelbereich zu dünn. Meist ist die Sanierung undicht. Die Preliner der herkömmlichen Kanalsanierung verbinden sich oder verkleben nicht mit dem Filzschlauch oder dem Altrohr. Die auch nach einer Sanierung fortbestehenden schadhaften Bereiche SB und GW stellen Missstände dar, die bei heutigen Kanalsanierungsmaßnahmen auftreten.

Fig. 1a zeigt die Einzelheit "X" aus Fig. 1 mehrfach vergrößert. Hierbei ist eine Kunststofffolie F, welche direkt an der Rohrinnwand anliegend außerhalb des Filzschlauchs FS angeordnet ist und diesen gegen das Rohr abdichten soll.

Zu Beginn einer Kanalsanierung in bestehenden defekten Kanälen, Betonrohren, Steinzeugrohren etc. werden diese vorab mit einer Kamera abgefahren, um Schäden zu erkennen und die genaue Länge des zu reparierenden Abschnittes - beispielsweise zwischen zwei Kanalschächten - zu ermitteln. Dann werden die in das jeweilige Rohr einzubringenden Materiallängen entsprechend zugeschnitten.

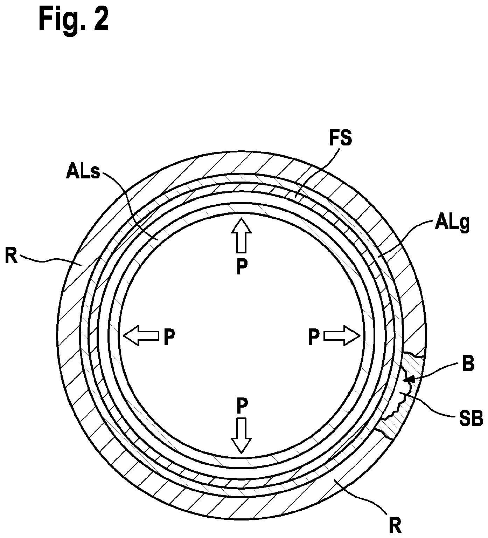

Fig. 2 zeigt beispielhaft ein zu sanierendes Rohr R mit einem auf der rechten Seite angedeuteten Wandschaden, hier einem inneren Wandausbruch SB. In der gezeigten Situation ist etwa der Zustand nach einer vollendeten Sanierungsarbeit zu sehen. Zunächst war ein biegsamer und unzerbrechlicher erster in einem Stück gewebter an seiner Außenwand (vorzugsweise mit PET-Material) laminierter Textilschlauch ALg in das leere Rohr eingebracht worden. Damit war eine trockene Umgebung für die nachfolgend einzubauenden Komponenten geschaffen worden. Danach wurde ein Filzschlauch FS, der zunächst, außerhalb des zu sanierenden Rohrs R, in seinem Inneren mit einem Kunstharz befüllt worden war im dem Fachmann bekannten Umstülpverfahren (Inversionstechnik) in das Innere des ersten Textilschlauchs ALg eingebracht. Hierbei gelangte die zunächst innere Seite des Filzschlauchs FS nach außen, sodass die mit Kunstharz benetzte Seite nun außen liegt und zum ersten Textilschlauch ALg zeigt. Im Anschluss daran wurde ein Kalibrierschlauch ALs, das ist ein zweiter in einem Stück gewebter, an seiner Außenwand mit Silikon beschichteter Textilschlauch in das Innere des Filzschlauchs FS eingebracht. Hieran anschließend hat man den Kalibierschlauch ALs an seinen beiden Enden verschlossen, aufgeblasen und unter Druck bis zu 4 bis 5 bar gesetzt. Der erste Textilschlauch ALg wurde vom Kunstharz durchdrungen und übernimmt zusätzliche Armierungsfunktionen. Der Filzschlauch FS und auch der erste Textilschlauch ALg wurden eine vorbestimmte Zeitdauer lang (etwa vier Stunden) radial an die Rohrinnenwand gedrückt (Pfeile P). Dabei wurden zunächst etwaige Luft- und/oder Fluid-einschlüsse sowohl im Filzschlauch FS als auch zwischen Filzschlauch FS und dem ersten Textilschlauch ALg radial nach außen hinausgepresst. Dann härtet das zwischen Filzschlauch FS und erstem Textilschlauch ALg befindliche Kunstharz aus und schafft eine feste Auskleidung. Die Aushärtung kann gefördert und beschleunigt werden durch Einbringen von Wärme, Dampf und/oder Licht, vorzugsweise UV-Licht, mit welchem das Kunstharz reagiert. Ist die Verwendung von Licht vorgesehen, wird der zweite Textilschlauch bei seiner Fertigung lichtdurchlässig ausgeführt. Hierauf wird hier nicht im Einzelnen eingegangen, da der Fachmann die hierfür erforderlichen Kenntnisse besitzt.

Da der erste Textilschlauch ALg, als OPW-Schlauch im Wesentlichen formstabil, im Vorfeld auf das Innenmaß des zu sanierenden Rohrs angepasst ist, behält er sein radiales und axiales Maß bei und legt sich nicht - wie dies bei aus dem Stand der Technik bekannten Verfahren standardmäßig passiert - in die Vertiefung der Ausbuchtung SB hinein, sondern "überbrückt" diese, wodurch eine glatte Rohrinnenwand erreicht wird (Bezugszeichen "B"). Hier in Fig. 2 ist der Kalibrieschlauch ALs bereits wieder vom Druck entlastet dargestellt, sodass sich ein Abstand zwischen Filzschlauch FS und Kalibrierschlauch ALs zeigt.

Untersuchungen haben gezeigt, dass die erfindungsgemäße Vorgehensweise eine Auskleidung von Rohren ergibt, die beständiger gegen chemische Einwirkungen ist, als bereits auf dem Markt übliche Produkte. Zudem ist die erfindungsgemäß geschaffene Auskleidung gegen von außen wirkende mechanische Belastungen und Witterungseinflüsse um ein Vielfaches widerstandsfähiger als bislang verwendete Produkte.

Durch die Verklebung des Filzschlauchs FS mit dem ersten Textilschlauch ALg wird dieser so dicht mit dem Filzschlauch FS verbunden, dass das bisher beobachtete Hinterflattern des ersten Textilschlauchs verhindert wird. Somit kann beim Öffnen der neu geschaffenen Auskleidung in seitliche Rohrab- oder zugänge (sog. Stutzen) im Kanal mit Robotern eine unbeschädigte Öffnung der Stutzen vorgenommen werden. Zum Vergleich: Herkömmlich eingesetzte Preliner sind nicht luftdurchlässig. Zwischen Filzschlauch und Preliner eingeschlossene Luft kann radial nicht entweichen, es bilden sich Luftporen im Harz. Um die eingeschlossene Luft aus dem System zu entfernen, wird die Prelinerfolie bislang mit einem Messer angeschlitzt. Das ist aber nur in den Bereichen möglich, in denen ein Zugang zum Schlauch besteht (d.h. nur in den Schächten). Somit verbleibt an den anderen Stellen sehr viel Luft im Filzschlauch.

Bei der erfindungsgemäßen Expansion durch Druck wird der erste Textilschlauch ALg mit Harz benetzt und durchdrungen. Der Widerstand des ersten Textilschlauchs ALg ist hoch genug, um ein Eindringen von Harz in Muffen und Löcher zuverlässig zu verhindern. Es bildet sich auf der Außenwand des ersten Textilschlauchs ALg ein Harzfilm, der mit dem Altrohr verklebt. Durch im Laminat des ersten Textilschlauches unter Druckbelastung entstehende Poren hindurch können etwa anwesende Gas- oder Flüssigkeitseinschlüsse radial nach außen zu dem Rohr, insbesondere Abwasserrohr gedrängt werden. Damit ist das Problem der "Hinterläufigkeit" (s.o.) bei der Sanierung gelöst, wenn ein Textilschlauch als Preliner zum Einsatz kommt. (Grundsätzlich ist der Einsatz von Prelinern vorgeschrieben, siehe Richtlinien ATV in Deutschland oder VSA QUIK in der Schweiz).

Etwaige zwischen dem ersten Textilschlauch ALg und dem Filzschlauch FS befindliche Luft-, Gas-, oder Fluidperlen werden durch den unter Druck luftdurchlässigen ersten Textilschlauch ALg herausgedrückt, sodass die Kombination aus Filzschlauch FS und erstem Textilschlauch ALg eine luft- oder gasfreie Auskleidung ergibt.

Der erste Textilschlauch ALg dient wie oben bereits näher ausgeführt zusätzlich als Expansionsschutz, denn er verhindert das Ausdehnen des Filzschlauchs und Überdehnungen (z.B. im Bereich von Fehlstellen im Rohr). Das Platzen des Filzschlauches FS wird so verhindert. Die Querschnittsfläche des gemäß der Erfindung neu geschaffenen Systems bleibt über die Länge des Rohres nahezu konstant. Damit ist sichergestellt, dass die radiale Wanddicke des Filzschlauchs bzw. Trägerschlauchs über die Einbaulänge ebenfalls im Wesentlichen nahezu gleichbleibt. Das bedeutet, dass durch den Expan-sionsschutz auch gewährleistet ist, dass die Wanddicke des Trägerschlauchs gleichmäßig im Radius erhalten bleibt.

## Patentansprüche

1. Anordnung zum Sanieren eines Rohres, insbesondere eines Abwasserrohres, die folgende Elemente aufweist:
a) einen in einem Stück gewebten an seiner Außenwand vorzugsweise laminierten ersten Textilschlauch (ALg),
b) einen im Inneren des ersten Textilschlauchs (ALg) angeordneten, mit einer aushärtbaren Kunstharzmischung benetzten Filzschlauch (FS), und
c) einen in einem Stück gewebten an seiner Außenwand mit einem an der Kunstharzmischung nicht anhaftenden Trennmittel, vorzugsweise Silikon beschichteten zweiten Textilschlauch (ALs) zur Einführung in den Filzschlauch (FS).

2. Anordnung nach Anspruch 1, **dadurch gekennzeichnet, dass** der zweite Textilschlauch (ALs) in seinem Inneren eine Einrichtung zum Einbringen von Wärme, Dampf oder Licht aufweist.

3. Verfahren zum Sanieren eines Rohres, insbesondere eines Abwasserrohres, vorzugsweise unter Verwendung einer Anordnung gemäß Anspruch 1 oder 2, das folgende Schritte aufweist:
a) Einbringen eines in einem Stück gewebten an seiner Außenwand laminierten ersten Textilschlauchs (ALg) in das Rohr (R), insbesondere Abwasserrohr (AR),
b) Einbringen eines mit einer aushärtbaren Kunstharzmischung benetzten Filzschlauchs (FS) in das Innere des ersten Textilschlauchs (ALg),
c) Einbringen eines in einem Stück gewebten an seiner Außenwand mit einem an der Kunstharzmischung nicht anhaftenden Trennmittel, vorzugsweise Silikon beschichteten zweiten Textilschlauchs (ALs) in das Innere des Filzschlauches (FS),
d) Im Wesentlichen luftdichtes Abschließen des zweiten Textilschlauchs (ALs),
e) Aufblasen des zweiten Textilschlauchs (ALs),
f) Eine vorbestimmte Zeitdauer lang dauerndes radiales Andrücken des zweiten Textilschlauchs (ALs), des Filzschlauchs (FS) sowie des ersten Textilschlauchs (ALg) an das Rohr, insbesondere Abwasserrohr (AR),
g) Aushärtenlassen der aushärtbaren Kunstharzmischung,
h) Entfernen des zweiten Textilschlauchs (ALs) aus dem Inneren des Filzschlauches (FS).

4. Verfahren nach Anspruch 3, **dadurch gekennzeichnet, dass** der Schritt b) derart ausgeführt wird, dass ein an seiner Innenwand mit einer aushärtbaren Kunstharzmischung benetzter Filzschlauch (FS) beim Einbringen in das Innere des ersten Textilschlauchs (ALg) derart umgestülpt wird, dass seine Innenwand nach dem Umstülpen nach außen zu dem ersten Textilschlauch (ALg) zeigt.

5. Verfahren nach Anspruch 3 oder 4, **dadurch gekennzeichnet, dass** der zweite Textilschlauch (ALs) während der Schritte f) und g) in seinem Inneren mit Wärme, Dampf oder Licht beaufschlagt wird.

6. Verfahren nach Anspruch 3, 4 oder 5, **dadurch gekennzeichnet, dass** der zweite Textilschlauch (ALs) bei Schritt e) auf einen Druck von bis zu 4 bar aufgeblasen wird, dass der erste Textilschlauch (ALg) fest an das Rohr (R), insbesondere Abwasserrohr (AR) gedrückt wird.

## Claims

1. Arrangement for mending a pipe, particularly a waste water pipe, comprising the following elements:
a) a first textile hose (ALg), woven in a single piece and preferably laminated on the outer wall thereof,
b) a felt hose (FS) arranged in the interior of the first textile hose (ALg) and wetted with a curable synthetic resin mixture, and
c) a second textile hose (ALs), woven in a single piece and coated on its outer wall with a release agent, preferably silicone, not adhering to the synthetic resin mixture, for introduction into the felt hose (FS).

2. Arrangement according to claim 1, wherein the second textile hose (ALs) has a device in its interior for introducing heat, steam or light.

3. Method for mending a pipe, particularly a waste water pipe, preferably using an arrangement according to claim 1 or 2, comprising the following steps:
a) introducing a first textile hose (ALg), woven in a single piece and laminated on the outer wall thereof, into the pipe (R), particularly the waste water pipe (AR),
b) introducing a felt hose (FS) wetted with a curable synthetic resin mixture into the interior of the first textile hose (ALg),
c) introducing a second textile hose (ALs), woven in a single piece and coated on its outer wall with a release agent, preferably silicone, not adhering to the synthetic resin mixture, into the interior of the felt hose (FS),
d) substantially airtight sealing of the second textile hose (ALs),
e) inflating the second textile hose (ALs),
f) pressing the second textile hose (ALs), the felt hose (FS) and the first textile (ALg) hose radially against the pipe, particularly the waste water pipe (AR), for a predetermined length of time,
g) leaving the curable synthetic resin mixture to cure,
h) removing the second textile hose (ALS) from inside the felt hose (FS).

4. Method according to claim 3, wherein the step b) is carried out in such a manner that a felt hose (FS) wetted on its inner wall with a curable synthetic resin mixture is turned inside out when it is introduced into the interior of the first textile hose (ALg) in such a manner that its inner wall faces outwards towards the first textile hose (ALg) after being turned inside out.

5. Method according to claim 3 or 4, wherein heat, steam or light is admitted to the interior of the second textile hose (ALs) during steps f) and g).

6. Method according to claim 3, 4 or 5, wherein in step e) the second textile hose (ALs) is inflated to a pressure of up to 4 bar, the first textile hose (ALg) being pressed firmly against the pipe (R), particularly the waste water pipe (AR).

## Revendications

1. Ensemble pour rénover un tube, en particulier une conduite d'eaux usées, qui comprend les éléments suivants :
a) un premier tuyau en textile (ALg) de préférence stratifié sur sa paroi extérieure, tissé en une pièce,
b) un tuyau en feutre (FS) humecté avec un mélange durcissable de résine synthétique, disposé à l'intérieur du premier tuyau en textile (ALg), et
c) un deuxième tuyau en textile (ALs), revêtu d'un agent séparateur non adhérent au mélange de résine synthétique, de préférence de la silicone, sur sa paroi extérieure, tissé en une pièce, pour l'introduction dans le tuyau en feutre (FS).

2. Ensemble selon la revendication 1, **caractérisé en ce que** le deuxième tuyau en textile (ALs) présente dans son intérieur un agencement pour l'apport de chaleur, de vapeur ou de lumière.

3. Procédé pour rénover un tube, en particulier une conduite d'eaux usées, de préférence en utilisant un ensemble selon la revendication 1 ou 2, qui comprend les étapes suivantes :
a) l'insertion d'un premier tuyau en textile (ALg), stratifié sur sa paroi extérieure, tissé en une pièce dans le tube (R), en particulier la conduite d'eaux usées (AR),
b) l'insertion d'un tuyau en feutre (FS) humecté avec un mélange durcissable de résine synthétique dans l'intérieur du premier tuyau en textile (ALg),
c) l'insertion d'un deuxième tuyau en textile (ALs) revêtu d'un agent séparateur non adhérent au mélange de résine synthétique, de préférence de la silicone, sur sa paroi extérieure, tissé en une pièce dans l'intérieur du tuyau en feutre (FS),
d) la fermeture sensiblement étanche à l'air du deuxième tuyau en textile (ALs),
e) le gonflement du deuxième tuyau en textile (ALs),
f) la pression radiale, durant une période prédéfinie, du deuxième tuyau en textile (ALs), du tuyau en feutre (FS) et du premier tuyau en textile (ALg) contre le tube, en particulier la conduite d'eaux usées (AR),
g) le durcissement du mélange durcissable de résine synthétique,
h) le retrait du deuxième tuyau en textile (ALs) hors de l'intérieur du tuyau en feutre (FS).

4. Procédé selon la revendication 3, **caractérisé en ce que** l'étape b) est exécutée de sorte qu'un tuyau en feutre (FS) humecté avec un mélange durcissable de résine synthétique sur sa paroi intérieure est retroussé lors de l'insertion dans l'intérieur du premier tuyau en textile (ALg) de sorte que sa paroi intérieure pointe après le retroussement vers l'extérieur en direction du premier tuyau en textile (ALg).

5. Procédé selon la revendication 3 ou 4, **caractérisé en ce que** le deuxième tuyau en textile (ALs) est soumis à la chaleur, à la vapeur ou à la lumière dans son intérieur pendant les étapes f) et g).

6. Procédé selon la revendication 3, 4 ou 5, **caractérisé en ce que** le deuxième tuyau en textile (ALs) est gonflé jusqu'à une pression pouvant aller jusqu'à 4 bar lors de l'étape e), **en ce que** le premier tuyau en textile (ALg) est pressé fermement contre le tube (R), en particulier la conduite des eaux usées (AR).
